# EUROPÄISCHE PATENTANMELDUNG

(11) **EP 3 620 259 A1**
(43) Veröffentlichungstag der Anmeldung: **11.03.2020**
(21) Anmeldenummer: 18193102.3
(22) Anmeldetag: 07.09.2018
(51) Int. Cl.: B23Q 1/00, B23Q 1/54

(54) **SPINDELKOPF FÜR EINE WERKZEUGMASCHINE UND WERKZEUGMASCHINE MIT EINEM SOLCHEN SPINDELKOPF**

(71) Anmelder: Fischer AG Präzisionsspindeln, 3360 Herzogenbuchsee (CH)
(72) Erfinder: Tresch, Roger, 4313 Möhlin (CH); Sun, Zi-Heng, 248 New Taipei City (TW)
(74) Vertreter: Hepp Wenger Ryffel AG

(57) **Zusammenfassung**

Die Erfindung betrifft einen Spindelkopf (1) für eine Werkzeugmaschine (2) umfassend eine Gabel (3) mit zwei Gabelarmen (4, 4') und eine Spindeleinheit (5) mit einem Spindelgehäuse (6), eine im Spindelgehäuse (6) angeordnete Motorspindel (7) mit einer Spindeldrehachse (8) und zwei am Spindelgehäuse (6) angeordneten Wellenstummeln (9, 9'), welche an einer Drehachse (A) der Spindeleinheit (5) ausgerichtet sind, wobei die Spindeleinheit (5) um die Drehachse (A) an den Gabelarmen (4, 4') drehbar gelagert ist, wobei die Motorspindel (7) wenigstens einen Versorgungsanschluss (10) aufweist, welcher mit einer Versorgungsleitung (11) verbunden ist und wobei die Versorgungsleitung (11) von einem Gabelarm (4) über den Wellenstummel (9) zum Spindelgehäuse (6) geführt wird. Erfindungsgemäss wird die Versorgungsleitung (11) vom Wellenstummel (9) in einen Hohlraum (12, 12') des Spindelgehäuses (6) durch eine Öffnung (13) im Spindelgehäuse (6) geführt, wobei der Hohlraum (12, 12') in einem Seitenbereich (14) des Spindelgehäuses (6) angeordnet ist, welcher nicht den Gabelarmen (4, 4') zugewandt ist.

## Beschreibung

Die Erfindung betrifft einen Spindelkopf für eine Werkzeugmaschine nach dem Oberbegriff des unabhängigen Anspruchs 1. Die Erfindung betrifft ferner eine Werkzeugmaschine mit einem solchen Spindelkopf.

Werkzeugmaschinen mit gattungsgemässen Spindelköpfen werden bei der spanenden Bearbeitung von Werkstücken verwendet und sind heutzutage als Mehrachsen-Werkzeugmaschinen ausgebildet, welche nebst der Bewegung des Spindelkopfes entlang der X-, Y- und Z-Achse auch eine Schwenkung des Spindelkopfes um eine Achse senkrecht zur Spindeldrehachse (A-Achse) sowie um eine weitere Achse (C-Achse) erlauben.

Bekannte Spindelköpfe umfassen in der Regel eine Gabel mit zwei Gabelarmen und eine Spindeleinheit. Die Spindeleinheit umfasst dabei ein Spindelgehäuse, eine im Spindelgehäuse angeordnete Motorspindel mit einer Spindeldrehachse und zwei am Spindelgehäuse angeordnete, hohle Wellenstummel, welche an einer Drehachse (A-Achse) der Spindeleinheit ausgerichtet sind. Die Spindeleinheit ist um die Drehachse (A-Achse) an den Gabelarmen drehbar gelagert.

Die Spindelköpfe sind mit einer Mehrzahl von Versorgungsleitungen verbunden, welche die Versorgung der Motorspindel sicherstellen. Die Versorgungsleitungen umfassen in der Regel Stromanschlüsse, Leitungen für Gase und Flüssigkeiten (wie z.B. für ein Kühl-/Schmiermittel), aber auch Datenleitungen, welche z.B. zur Regelung/Steuerung der Motorspindel verwendet werden oder Rückkopplungssignale aus der Motorspindel oder Sensoren derselben leiten.

Bei Spindelköpfen nach dem Stand der Technik verlaufen die Versorgungsleitungen, von einer Werkzeugmaschine kommend, entlang eines Gabelarms oder in einem Hohlraum des Gabelarms, werden dann umgelenkt und parallel zur A-Achse bis zur Spindeleinheit geführt und dann wieder umgelenkt und parallel zur Spindeldrehachse bis zu einem zur Aufnahme eines Werkzeuges abgewandten Ende der Motorspindel geleitet.

Nachteilig ist dabei, dass die Versorgungsleitungen an der Spindeleinheit in einem Bereich angeordnet sind, welcher von den Gabelarmen abgedeckt ist. Die Zugänglichkeit der Versorgungsleitungen ist somit von den Gabelarmen beeinträchtigt. Bei Unterhaltsarbeiten sind die Versorgungsleitungen daher schwer zu erreichen. Der Spindelkopf muss beispielsweise um die A-Achse geschwenkt werden, damit die Versorgungsleitungen erreicht werden können oder ggf. Abdeckungen des Spindelkopfes, welche die Versorgungsleitungen abdecken, entfernt werden können.

Es ist daher Aufgabe der vorliegenden Erfindung, einen Spindelkopf der eingangs genannten Art anzugeben, welcher die Nachteile des Bekannten nicht aufweist und insbesondere eine gegenüber dem Stand der Technik verbesserte Führung und Zugänglichkeit der Versorgungsleitungen aufweist.

Diese Aufgabe wird mit einem erfindungsgemässen Spindelkopf gelöst.

Die Motorspindel weist dabei wenigstens einen Versorgungsanschluss auf, welcher mit einer Versorgungsleitung verbunden ist.

In der nachfolgenden Beschreibung wird stets eine Versorgungsleitung beschrieben, wobei die Erfindung sich nicht auf eine einzige Versorgungsleitung beschränkt. Im Sinne der vorliegenden Erfindung wird somit mit der Versorgungsleitung wenigstens eine Versorgungsleitung der Motorspindel gemeint. Bevorzugt verlaufen alle Versorgungsleitungen der Motorspindel wie erfindungsgemäss beschrieben.

Die Versorgungsleitung wird dabei, von einem Gabelarm kommend, über den Wellenstummel zum Spindelgehäuse geführt.

Erfindungsgemäss wird die Versorgungsleitung vom Wellenstummel in einen Hohlraum des Spindelgehäuses durch eine Öffnung im Spindelgehäuse geführt.

Der Hohlraum ist dabei in einem Seitenbereich des Spindelgehäuses angeordnet, welcher nicht den Gabelarmen zugewandt ist.

Das bedeutet im Sinne der vorliegenden Erfindung, dass die Versorgungsleitung in einem Hohlraum des Spindelgehäuses geführt wird, welcher Hohlraum nicht durch die Gabelarme überlagert ist.

Insbesondere ist der Hohlraum des Spindelgehäuses in einem Seitenbereich des Spindelgehäuses angeordnet, welcher sich bezüglich der Spindeldrehachse in einem Winkelbereich befindet, der nicht von den Gabelarmen geschnitten wird.

Somit kann die Versorgungsleitung derart verlegt werden, dass diese von aussen her besser zugänglich ist als bei Spindelköpfen nach dem Stand der Technik.

Da üblicherweise die Motorspindel mit einer Mehrzahl von Versorgungsleitungen verbunden ist, können die Versorgungsleitungen von beiden Seiten her der Motorspindel über beide Wellenstummel geführt werden.

Das Spindelgehäuse weist dabei bevorzugt zwei Hohlräume auf, welche bezüglich der Spindeldrehachse sich gegenüberliegen befinden, so dass Versorgungsleitungen beidseitig der Motorspindel geführt werden können.

Die Versorgungsleitung verläuft bevorzugt bezüglich der Drehachse (A-Achse) der Spindeleinheit radial nach aussen, wenn die Versorgungsleitung vom Wellenstummel in den Hohlraum des Spindelgehäuses geleitet wird.

Dabei kann die Versorgungsleitung radial nach aussen verlaufen, d.h. senkrecht zur Drehachse (A-Achse) der Spindeleinheit. Sie kann zusätzlich auch noch parallel zur Drehachse (A-Achse) verlaufen. Die Versorgungsleitung verläuft dabei bevorzugt in einer Richtung, welche zur Spindeldrehachse nicht parallel ist.

Bevorzugt kreuzt die Versorgungsleitung eine Ebene, welche parallel zu einer Ebene ist, die von der Spindeldrehachse und der Drehachse (A-Achse) definiert wird.

Die Versorgungsleitung wird somit, wenn diese vom Wellenstummel in den Hohlraum des Spindelgehäuses geleitet wird, weg von einem durch die Gabelarme abgedeckten Bereich des Spindelgehäuses geführt.

Der Hohlraum des Spindelgehäuses erstreckt sich bevorzugt im Wesentlichen zwischen den beiden Gabelarmen.

Damit kann der Hohlraum des Spindelgehäuses genügend gross dimensioniert werden, dass mehrere Versorgungsleitungen problemlos dort hindurchgeführt werden können.

Bevorzugt umfasst das Spindelgehäuse eine abnehmbare Abdeckung, welche den Hohlraum begrenzt, wobei die Abdeckung in einem Seitenbereich des Spindelgehäuses angeordnet ist, welcher nicht den Gabelarmen zugewandt ist.

Analog zum Hohlraum des Spindelgehäuses ist die Abdeckung derart angeordnet, dass diese nicht von den Gabelarmen überlagert ist und insbesondere beim Entfernen nicht von den Gabelarmen abgedeckt ist. Somit kann die Abdeckung auf einfache Art und Weise entfernt und wieder am Spindelgehäuse befestigt werden, ohne dass der Spindelkopf bewegt werden muss oder weitere Bauteile der Gabel zuerst entfernt werden müssen. Zudem ermöglicht die Abdeckung die Ausbildung eines geschlossenen und vor äusseren Einflüssen geschützten Hohlraums, wobei durch Entfernen der Abdeckung die Versorgungsleitung zugänglich bleibt, ohne dass der Spindelkopf beispielsweise um die Drehachse (A-Achse) geschwenkt werden muss.

Bevorzugt ist wenigstens ein Wellenstummel hohl ausgebildet, wobei die Versorgungsleitung durch den hohlen Wellenstummel geführt wird.

Ein hohler Wellenstummel kann auf einfache Art und Weise hergestellt werden. Zudem ermöglicht der hohle Wellenstummel, dass die Versorgungsleitung durch den hohlen Wellenstummel geführt werden kann. Somit kann die Versorgungsleitung einfach verlegt werden und die Notwendigkeit der Fertigung von gesonderten Bohrungen und Drehdurchführungen/Schleifringen für die Versorgungsleitungen entfällt.

Bevorzugt wird die Versorgungsleitung in einen Hohlraum des Gabelarms geführt.

Dadurch kann die Versorgungsleitung auch im Gabelarm vor äusseren Einflüssen geschützt verlegt werden.

In einem solchen Fall weist der Gabelarm eine abnehmbare Abdeckung auf, welche den Hohlraum des Gabelarms abdeckt, wobei die Abdeckung an der der Motorspindel abgewandten Aussenseite des Gabelarms angeordnet ist.

Somit kann die Versorgungsleitung durch Entfernen der Abdeckung einfach verlegt oder erreicht werden, beispielsweise wenn diese untersucht werden muss.

Bevorzugt ist der wenigstens eine Versorgungsanschluss an einem zur Aufnahme eines Werkzeuges abgewandten Ende der Motorspindel angeordnet.

Die Erfindung betrifft ferner eine Werkzeugmaschine mit einem erfindungsgemässen Spindelkopf.

Erfindungsgemäss ist der Spindelkopf drehbar um eine zweite Drehachse (C-Achse) gelagert, wobei die zweite Drehachse (C-Achse) die Drehachse (A-Achse) schneidet.

Es kann somit eine Mehrachsenwerkzeugmaschine bereitgestellt werden, bei welcher die wenigstens eine Versorgungsleitung einfach zu verlegen ist und gut, beispielsweise für Unterhaltzwecke, zugänglich ist.

Die Erfindung wird nachfolgend anhand eines bevorzugten Ausführungsbeispiels in Verbindung mit den Figuren näher erläutert. Es zeigen:
- Fig. 1: eine schematische perspektivische Ansicht einer Werkzeugmaschine mit einem erfindungsgemässen Spindelkopf;
- Fig. 2: eine schematische Schnittansicht des erfindungsgemässen Spindelkopfes;
- Fig. 3: eine schematische Seitenansicht eines erfindungsgemässen Spindelkopfes ohne Abdeckung;
- Fig. 4: eine schematische, teilweise geschnittene perspektivische Ansicht des erfindungsgemässen Spindelkopfes.

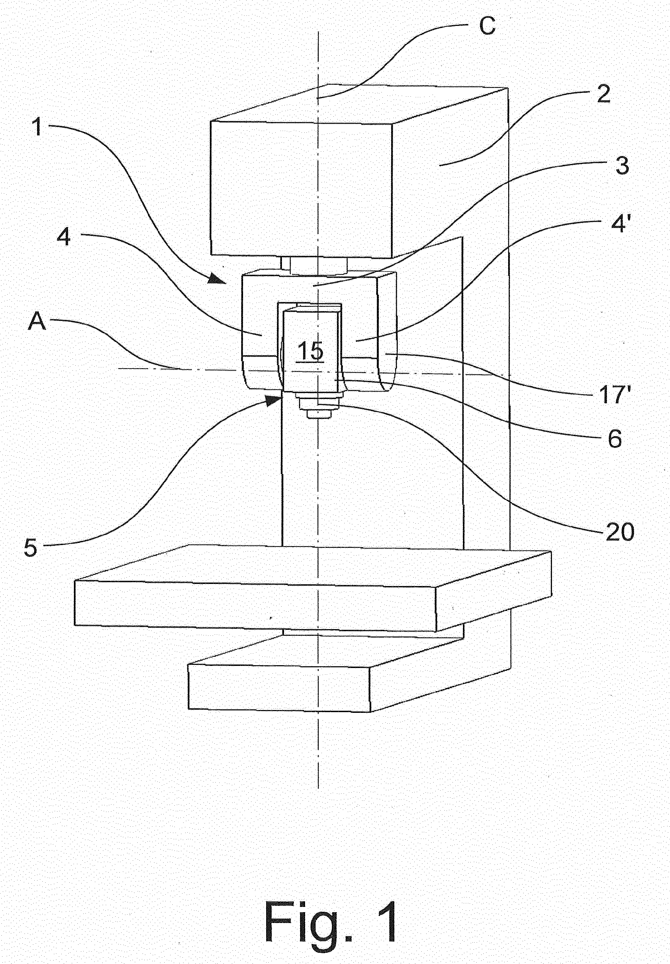

In der Figur 1 ist schematisch eine Werkzeugmaschine 2 gezeigt, welche einen Spindelkopf 1 umfasst.

Der Spindelkopf 1 umfasst eine Gabel 3 mit zwei Gabelarmen 4 und 4'. Zwischen den beiden Gabelarmen 4 und 4' ist eine Spindeleinheit 5 angeordnet. Die Spindeleinheit 5 ist um Drehachsen A und C (durch Strichpunktlinien dargestellt) drehbar gelagert. Drehantriebe und Lagerungen für die Spindeleinheit 5 sind in der Figur 1 nicht dargestellt.

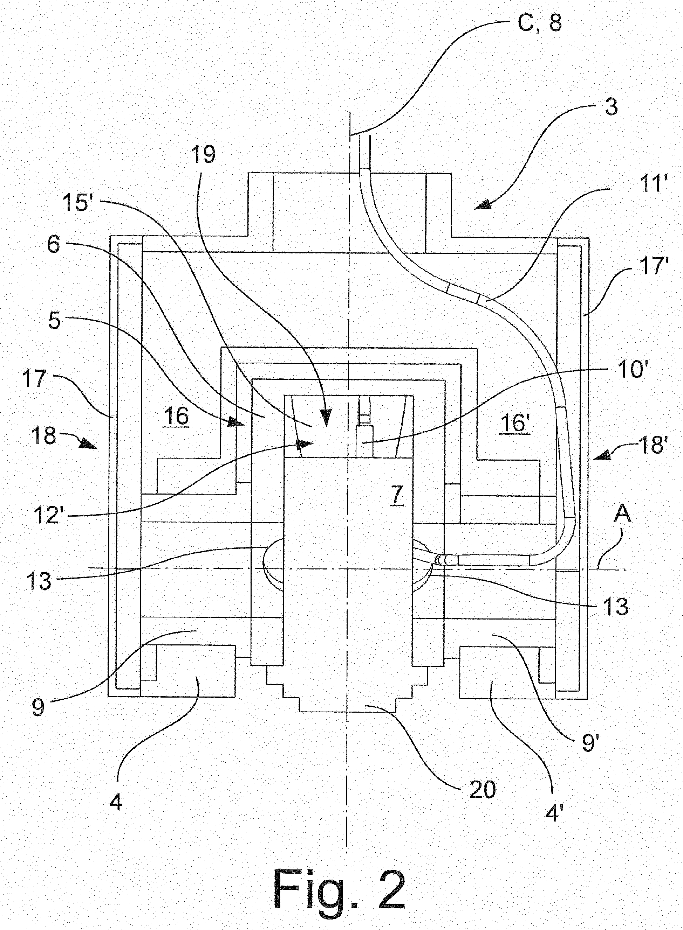

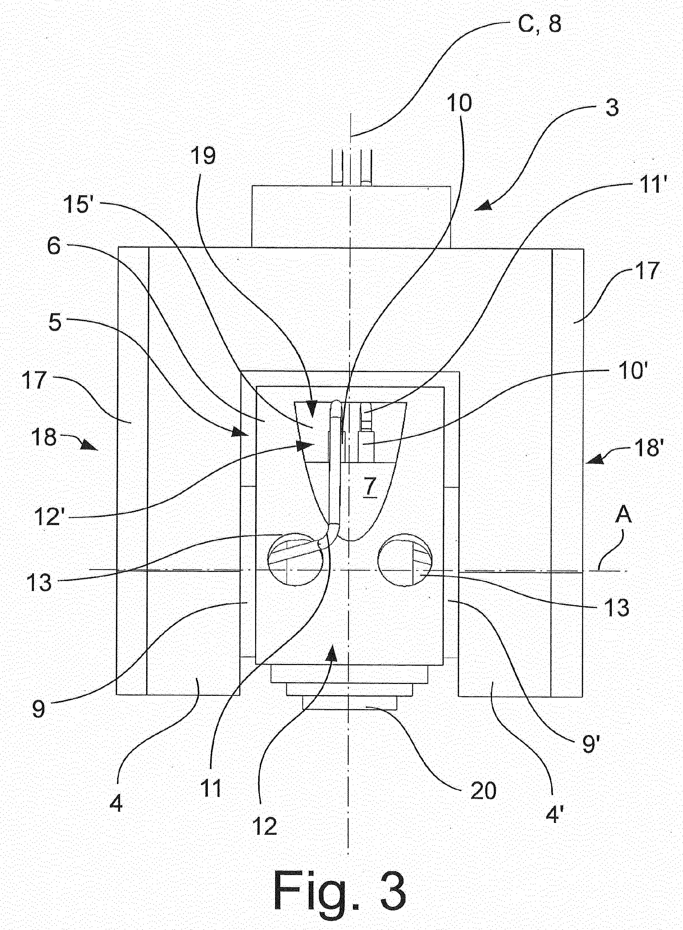

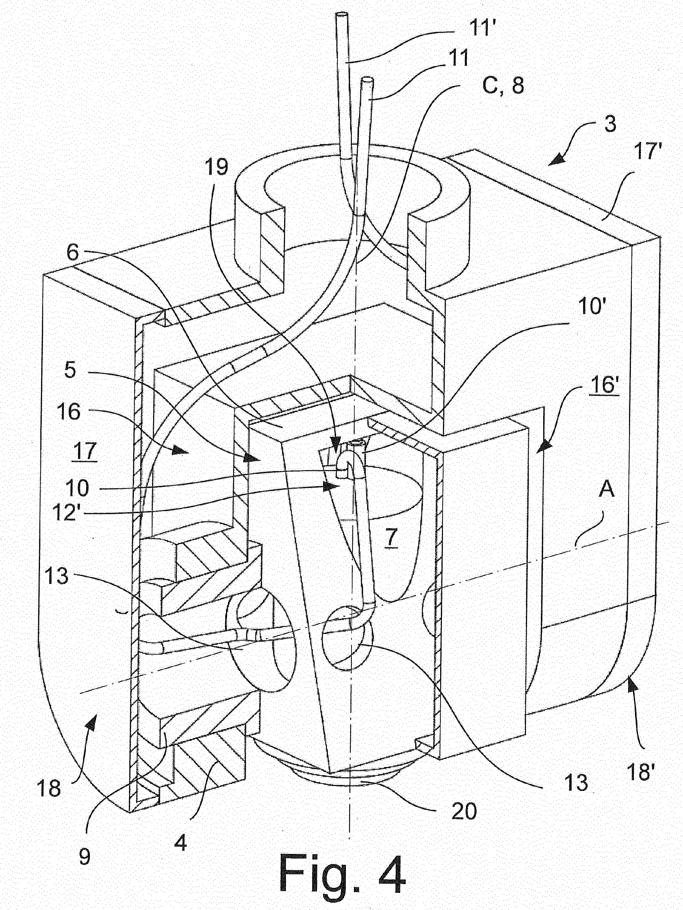

Weitere Details des Aufbaus des Spindelkopfes 1 sind in den Figuren 2 bis 4 gezeigt. Drehantriebe und Lagerungen für die Spindeleinheit 5 sind in den Figuren 2 bis 4 ebenfalls nicht dargestellt. Die Figur 2 zeigt schematisch den Spindelkopf in einer Schnittansicht, wobei die Schnittebene durch die Drehachsen A und C definiert wird. In der Figur 3 ist schematisch ein Spindelkopf 1 ohne eine in Figur 1 erkennbare Abdeckung 15 gezeigt. In Figur 4 ist eine schematische, teilweise geschnittene perspektivische Ansicht des Spindelkopfes 1 wiedergegeben.

Die Spindeleinheit 5 umfasst ein Spindelgehäuse 6 und eine im Spindelgehäuse 6 angeordnete Motorspindel 7. Die Motorspindel 7 weist eine Spindeldrehachse 8 auf, welche in der in den Figuren 1 bis 4 gezeigten Position der Spindeleinheit 5 mit der Drehachse C übereinstimmt.

Die Motorspindel 7 ist an ihrem der Gabel 3 abgewandten Ende mit einer Werkzeugaufnahme 20 versehen. An dem der Werkzeugaufnahme 20 abgewandten Ende 19 weist die Motorspindel 7 eine Mehrzahl von Versorgungsanschlüssen auf, von denen lediglich zwei der Übersicht halber mit den Bezugszeichen 10 und 10' versehen sind.

Am Spindelgehäuse 6 sind zwei hohle Wellenstummel 9 und 9' befestigt, welche koaxial zur Drehachse A ausgerichtet sind. Die hohlen Wellenstummel 9, 9' sind an den Gabelarmen 4 und 4' drehbar gelagert und ermöglichen die Drehung der Spindeleinheit 5 um die Drehachse A.

Das Spindelgehäuse 6 weist zwei bezüglich der Spindeldrehachse 8 sich gegenüberliegende Hohlräume 12 und 12' auf, von denen der Hohlraum 12 lediglich in der Figur 3 sichtbar ist. Die Hohlräume 12 und 12' erstrecken sich zwischen den beiden Gabelarmen 4 und 4' und sind in einem Seitenbereich 14 des Spindelgehäuses 6 angeordnet, welcher nicht den Gabelarmen 4 und 4' zugewandt ist. Die Hohlräume 12 und 12' sind somit durch die Entfernung der zugeordneten Abdeckung 15 bzw. 15' von aussen her gut zugänglich.

Der Verlauf von zwei Versorgungsleitungen 11 und 11' ist in den Figuren 2 bis 4 ersichtlich, wobei in der Figur 2 lediglich die Versorgungsleitung 11' sichtbar ist.

Die Versorgungsleitung 11 verläuft zunächst innerhalb der Gabel 3 und in einen Hohlraum 16 des Gabelarms 4. Der Hohlraum 16 des Gabelarms 4 ist mit einer Abdeckung 17 versehen, welche an einer der Spindeleinheit 5 abgewandten Aussenseite 18 des Gabelarms 4 angeordnet ist. Somit wird die Zugänglichkeit der Versorgungsleitung 11 im Gabelarm 4 gewährleistet. Entsprechend weist der Gabelarm 4' ebenfalls einen Hohlraum 16' mit einer Abdeckung 17' auf, in welchem Hohlraum 16' die Versorgungsleitung 11' verläuft.

Die Versorgungsleitungen 11 und 11' werden dann parallel zur Drehachse A innerhalb des hohlen Wellenstummels 9 bzw. 9' bis zur Spindeleinheit 5 geführt.

Am Übergang vom hohlen Wellenstummel 9 bzw. 9' zum Spindelgehäuse 6 sind Öffnungen 13 vorgesehen, durch welche die Versorgungsleitungen 11, 11' bezüglich der Drehachse A nach aussen und weg von den beiden Gabelarmen 4 und 4' geführt und in den Hohlraum 12 geleitet werden. Die Versorgungsleitung 11 bzw. 11' durchkreuzt dabei eine Ebene, welche parallel zu einer durch die Drehachsen A und C aufgespannten Ebene liegt.

Die Versorgungsleitung 11 bzw. 11' wird dann innerhalb des Hohlraumes 12 nach oben in Richtung des Endes 19 der Motorspindel 7 geführt und ist mit dem entsprechenden Versorgungsanschluss 10 bzw. 10' der Motorspindel 7 verbunden. Der Verlauf der Versorgungsleitung 11 ist aus den Figuren 3 und 4 ersichtlich.

Es ist somit ersichtlich, dass die Versorgungsleitung 11 durch die Entfernung der Abdeckung 15, wie in der Figur 3 gezeigt, gut zugänglich ist, ohne dass beispielsweise weitere Abdeckungen oder Bauteile des Spindelkopfes 1 entfernt werden müssen.

## Patentansprüche

1. Spindelkopf (1) für eine Werkzeugmaschine (2) umfassend:
- eine Gabel (3) mit zwei Gabelarmen (4, 4');
- eine Spindeleinheit (5) mit einem Spindelgehäuse (6), eine im Spindelgehäuse (6) angeordnete Motorspindel (7) mit einer Spindeldrehachse (8) und zwei am Spindelgehäuse (6) angeordneten Wellenstummeln (9, 9'), welche an einer Drehachse (A) der Spindeleinheit (5) ausgerichtet sind, wobei die Spindeleinheit (5) um die Drehachse (A) an den Gabelarmen (4, 4') drehbar gelagert ist;
wobei die Motorspindel (7) wenigstens einen Versorgungsanschluss (10) aufweist, welcher mit einer Versorgungsleitung (11) verbunden ist,
wobei die Versorgungsleitung (11) von einem Gabelarm (4) über den Wellenstummel (9) zum Spindelgehäuse (6) geführt wird,
**dadurch gekennzeichnet, dass**
die Versorgungsleitung (11) vom Wellenstummel (9) in einen Hohlraum (12, 12') des Spindelgehäuses (6) durch eine Öffnung (13) im Spindelgehäuse (6) geführt wird, wobei der Hohlraum (12, 12') in einem Seitenbereich (14) des Spindelgehäuses (6) angeordnet ist, welcher nicht den Gabelarmen (4, 4') zugewandt ist.

2. Spindelkopf (1) nach Anspruch 1, **dadurch gekennzeichnet, dass** die Versorgungsleitung (11) bezüglich der Drehachse (A) der Spindeleinheit (5) radial nach aussen verläuft.

3. Spindelkopf (1) nach Anspruch 1 oder 2, **dadurch gekennzeichnet, dass** die Versorgungsleitung (11) eine Ebene kreuzt, welche parallel zu einer Ebene ist, die von der Spindeldrehachse (8) und der Drehachse (A) definiert wird.

4. Spindelkopf () nach Anspruch 1, 2 oder 3, **dadurch gekennzeichnet, dass** der Hohlraum (12, 12') des Spindelgehäuses (6) sich im Wesentlichen zwischen den beiden Gabelarmen (4, 4') erstreckt.

5. Spindelkopf (1) nach einem der Ansprüche 1 bis 4, **dadurch gekennzeichnet, dass** das Spindelgehäuse (6) eine abnehmbare Abdeckung (15, 15') umfasst, welche den Hohlraum (12, 12') begrenzt, wobei die Abdeckung (15, 15') in einem Seitenbereich (14) des Spindelgehäuses (6) angeordnet ist, welcher nicht den Gabeln (4, 4') zugewandt ist.

6. Spindelkopf (1) nach einem der vorhergehenden Ansprüche, **dadurch gekennzeichnet, dass** wenigstens ein Wellenstummel (4, 4') hohl ausgebildet ist, wobei die Versorgungsleitung (11) durch den hohlen Wellenstummel (4, 4') geführt wird.

7. Spindelkopf (1) nach einem der vorhergehenden Ansprüche, **dadurch gekennzeichnet, dass** die Versorgungsleitung (11) in einen Hohlraum (16, 16') des Gabelarms (4, 4') geführt wird.

8. Spindelkopf (1) nach Anspruch 7, **dadurch gekennzeichnet, dass** der Gabelarm (4, 4') eine abnehmbare Abdeckung (17, 17') aufweist, welche den Hohlraum (16, 16') des Gabelarms (4, 4') abdeckt, wobei die Abdeckung (17, 17') an der der Motorspindel (5) abgewandten Aussenseite (18) des Gabelarms (4, 4') angeordnet ist.

9. Spindelkopf (1) nach einem der vorhergehenden Ansprüche, **dadurch gekennzeichnet, dass** der wenigstens eine Versorgungsanschluss (10) an einem zur Aufnahme eines Werkzeuges abgewandten Ende (19) der Motorspindel (5) angeordnet ist.

10. Werkzeugmaschine (2) mit einem Spindelkopf (1) nach einem der vorhergehenden Ansprüche, **dadurch gekennzeichnet, dass** der Spindelkopf (1) drehbar um eine zweite Drehachse (C) gelagert ist, wobei die zweite Drehachse (C) die Drehachse (A) schneidet.
